# EUROPÄISCHE PATENTSCHRIFT

(11) **EP 3 202 268 B1**
(45) Veröffentlichungstag und Bekanntmachung des Hinweises auf die Patenterteilung: **22.09.2021**
(21) Anmeldenummer: 16174389.3
(22) Anmeldetag: 14.06.2016
(51) Int. Cl.: A21C 11/02

(54) **STEMPEL ZUM PRÄGEN ODER AUSSTECHEN**
STAMP FOR EMBOSSING OR CUTTING OUT
TAMPON POUR IMPREGNER OU DECOUPER

(30) Priorität: 03.02.2016 DE 202016000692 U
(43) Veröffentlichungstag der Anmeldung: 09.08.2017
(73) Patentinhaber: Global Innovations Germany GmbH & Co. KG, 54340 Longuich (DE)
(72) Erfinder: Münich, Torsten, 54340 Longuich (DE)
(74) Vertreter: Tarvenkorn, Oliver

(56) Entgegenhaltungen:
- CN-U- 202 184 081
- CN-Y- 2 482 494
- DE-U1-202012 012 034
- DE-U1-202012 012 034
- DE-U1-202016 000 692
- JP-A- H10 217 592
- US-A- 1 431 842
- US-A- 4 928 594
- US-A1- 2010 005 975

## Beschreibung

Die Erfindung betrifft einen Stempel zum Prägen oder Ausstechen.

Stempel zum Prägen von Teigwaren, sind in vielfaltigen Formen bekannt. Derartige Stempel weisen beispielsweise eine Platte mit einem Griff auf, wobei die Platte eine Deckflache und eine der Deckflache gegenüberliegende Grundflache sowie eine die Deckflache und die Grundflache verbindende Randflache aufweist. An der Platte ragt mindestens ein Vorsprung aus der Grundflache heraus- und/oder mindestens eine Vertiefung in diese hinein. Zudem ist an der Platte mindestens ein Griff angeordnet.

Aus der DE 20 2016 000 692 U1, der US 1 431 842 A, der JP H10 217592 A, der CN 2 482 494 Y und der DE 20 2012 012 034 U1 sind Prägevorrichtungen bekannt, welche mehrteilig ausgebildet sind und insbesondere eine Platte und einen getrennt von der Platte realisierten Griff zeigen. Die Platte und der Griff sind nach der Herstellung dieser Komponenten miteinander verbunden. Ferner zeigt die US 2010/005975 A1 ein Prägewerkzeug, welches ohne schwenkbaren Griff realisiert ist.

Aufgabe der vorliegenden Erfindung ist es, einen Stempel anzugeben, der zum einen bei Nichtgebrauch platzsparend verstaubar und zum anderen bei Gebrauch einfach zu handhaben ist.

Zur Lösung der Aufgabe weist die Erfindung die Merkmale des Patentanspruchs 1 auf.

Der besondere Vorteil der Erfindung besteht darin, dass der Griff des Stempels bei Nichtgebrauch platzsparend angeordnet und bei Gebrauch leicht zu handhaben ist. Ein derartiger Stempel lasst sich in der Ruhelage des Griffes leicht verstauen und ist deshalb auch als Verkaufsartikel, Werbeartikel, Streuartikel, Versandartikel und als Beilage zu Produkten, beispielsweise an oder in den Produkten selbst oder an oder in den Produktverpackungen, verwendbar.

Grundsätzlich sind der Griff und die Platte nach Art, Form, Dimensionierung und Material in weiten geeigneten Grenzen frei wählbar. Eine besonders vorteilhafte Weiterbildung der Erfindung sieht jedoch vor, dass der Griff derart ausgebildet und an der Platte angeordnet ist, dass der Griff in dessen Ruhelage die Höhe der Platte im Wesentlichen nicht überragt. Die Höhe der Platte ist dabei der Abstand zwischen Deckflache und Grundflache. Hierdurch ist der Platzbedarf des Stempels in der Ruhelage des Griffes, insbesondere was die Gesamthöhe des Stempels anbelangt, minimiert.

Der Griff und die Platte sind einstückig ausgebildet. Die gelenkige Verbindung von Griff und Platte ist als ein Filmscharnier ausgebildet. Auf diese Weise ist die Konstruktion des Stempels vereinfacht, was die Kosten reduziert. Auch ist dadurch der Griff unverlierbar an der Platte befestigt.

Der Griff ist als ein Bügelgriff ausgebildet ist, der über zwei voneinander beabstandete Gelenke an der Platte befestigt ist. Hierdurch ist zum einen eine große Griffflache realisierbar, was die Bedienbarkeit weiter verbessert. Zum anderen ist durch die voneinander beabstandeten Gelenke die Stabilität der gelenkigen Befestigung des Griffes an der Platte erhöht.

Grundsätzlich ist die Anordnung des Griffes relativ zur Platte in weiten geeigneten Grenzen frei wählbar. Die Erfindung sieht vor, dass der Griff in dessen Ruhelage die Platte zumindest teilweise randseitig umschließt. Auf diese Weise lasst sich eine hinsichtlich der Gesamthöhe des Stempels platzsparende Ruhelage des Griffes konstruktiv einfach realisieren.

Eine vorteilhafte Weiterbildung der vorgenannten Ausführungsform sieht vor, dass der Griff die Platte derart umschließt, dass die randseitige Kontur der Platte mit dem Griff im Wesentlichen stetig verlauft. Hierdurch ist ein gefälliges Erscheinungsbild des Stempels in der Ruhelage des Griffes gefordert.

Die Platte und der Griff sind einstückig aus einem Kunststoff hergestellt. Kunststoffe sind leicht zu verarbeiten, kostengünstig und weisen eine geringe Dichte auf.

Weitere vorteilhafte Weiterbildungen sehen vor, dass der Stempel in der Ruhelage des Griffes eine Gesamthöhe von kleiner oder gleich 3,3 mm aufweist und/oder dass der Vorsprung eine Höhe und/oder die Vertiefung eine Tiefe von kleiner oder gleich 1,8 mm aufweist/aufweisen. Auf diese Weise ist eine Verwendung als Produkt-, Verpackungsbeilage oder Versandartikel weiter erleichtert.

Eine besonders vorteilhafte Weiterbildung der Erfindung sieht vor, dass der Stempel mindestens einen ersten Vorsprung und einen zweiten Vorsprung aufweist, wobei der zweite Vorsprung als eine geschlossene Kontur ausgebildet ist, peripher zu dem ersten Vorsprung und/oder der Vertiefung angeordnet ist und, bezogen auf die Grundflache, eine Höhe aufweist, die größer als die des ersten Vorsprungs ist. Hierdurch kann der Stempel beispielsweise in einem einzigen Arbeitsgang gleichzeitig zum Prägen und zum Ausstechen von Teigwaren oder dergleichen verwendet werden.

Aus den weiteren Unteransprüchen und der nachfolgenden Beschreibung sind weitere Vorteile, Merkmale und Einzelheiten der Erfindung zu entnehmen.

Die Zeichnungen dienen lediglich beispielhaft der Klarstellung der Erfindung und haben keinen einschränkenden Charakter. Es zeigen:
- Fig. 1a: ein erstes Ausführungsbeispiel der erfindungsgemäßen Lehre in einer Untersicht, mit dem Griff in dessen Ruhelage;
- Fig. 1b: das erste Ausführungsbeispiel in einer Seitenansicht;
- Fig. 1c: das erste Ausführungsbeispiel in einer weiteren Seitenansicht;
- Fig. 1d: das erste Ausführungsbeispiel in einer Draufsicht auf eine Deckflache;
- Fig. 1e: das erste Ausführungsbeispiel in einer Seitenansicht mit dem Griff in dessen Ruhe- und Verwendungslage;
- Fig. 2a: ein zweites Ausführungsbeispiel der erfindungsgemäßen Lehre in einer Untersicht, mit dem Griff in dessen Ruhelage;
- Fig. 2b: das zweite Ausführungsbeispiel in einer Seitenansicht;
- Fig. 2c: das zweite Ausführungsbeispiel in einer weiteren Seitenansicht;
- Fig. 2d: das zweite Ausführungsbeispiel in einer Draufsicht auf eine Deckflache;
- Fig. 2e: das zweite Ausführungsbeispiel in einer Seitenansicht mit dem Griff in dessen Ruhe- und Verwendungslage;
- Fig. 3a: ein drittes Ausführungsbeispiel der erfindungsgemäßen Lehre in einer Untersicht, mit den Griffen in deren Ruhelage;
- Fig. 3b: das dritte Ausführungsbeispiel in einer Seitenansicht;
- Fig. 3c: das dritte Ausführungsbeispiel in einer weiteren Seitenansicht;
- Fig. 3d: das dritte Ausführungsbeispiel in einer Draufsicht auf eine Deckflache;
- Fig. 3e: das dritte Ausführungsbeispiel in einer Seitenansicht mit den Griffen in deren Ruhe- und Verwendungslage;
- Fig. 4: ein viertes Ausführungsbeispiel der erfindungsgemäßen Lehre in einer Untersicht, mit den Griffen in deren Ruhelage und
- Fig. 5: ein fünftes Ausführungsbeispiel der erfindungsgemäßen Lehre in einer Untersicht, mit den Griffen in deren Ruhelage.

Gleiche oder gleichwirkende Bauteile sind in den einzelnen Fig. mit den gleichen Bezugszeichen versehen.

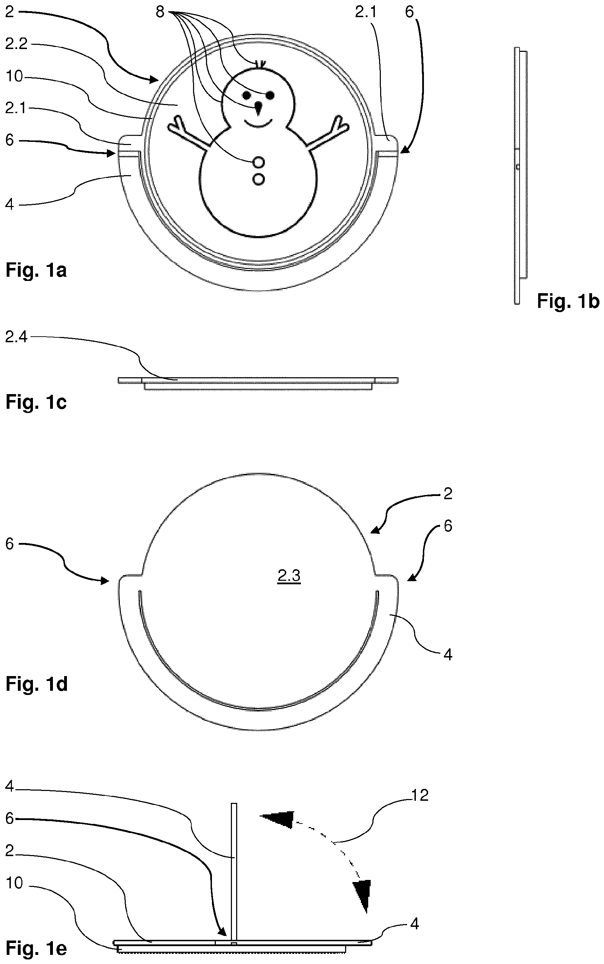

In Fig. 1a bis 1e ist ein erstes Ausführungsbeispiel eines erfindungsgemäßen Stempels dargestellt. Der Stempel ist hier als Keksstempel ausgebildet. Keksstempel werden dazu verwendet, um Motive in ausgerollten Teig einzuprägen. Der auf diese Weise behandelte Teig wird aus dem restlichen Teig ausgestochen und in einem Backofen gebacken.

Der Keksstempel weist eine Platte 2 und einen als Bügelgriff ausgebildeten Griff 4 auf. Platte 2 und Griff 4 sind hier einstückig ausgebildet und aus einem Kunststoff hergestellt. Der Bügelgriff 4 ist dabei über zwei voneinander beabstandete und als Filmscharniere ausgebildete Gelenke 6 gelenkig mit der Platte 2 verbunden. Die Filmscharniere 6 sind hier durch eine Materialschwächung zwischen Platte 2 und Griff 4 gebildet.

Die Fig. 1a bis 1d zeigen den Stempel mit in der Ruhelage befindlichem Griff 4, während Fig. 1 den Griff 4 in dessen Ruhe- und Verwendungslage zeigt.

In dem vorliegenden Ausführungsbeispiel ist die Platte 2 kreisscheibenförmig ausgebildet, wobei der Bügelgriff 4 die Platte 2 im Wesentlichen halbkreisringförmig umschließt. Zur Ausbildung der Filmscharniere 6 weist die Platte 2 im Verbindungsbereich mit dem Bügelgriff 4 zwei sich diametral gegenüberliegende, randseitige Arme 2.1 auf.

Die Platte 2 weist ferner eine ebene Grundflache 2.2 und eine ebene Deckflache 2.3 auf, die über eine umlaufende Randflache 2.4 miteinander verbunden sind. Die beiden Flachen 2.2 und 2.3 verlaufen parallel zueinander, so dass die Höhe der Platte 2, also der Abstand zwischen der Grundflache 2.2 und der Deckflache 2.3, über die gesamte Platte 2 konstant gleich ist.

Die Platte 2 weist auf der in Fig. 1a sichtbaren Grundflache 2.2 mehrere als erste Vorsprunge ausgebildete Vorsprunge 8 auf, die in Summe ein Schneemannmotiv ergeben. Bei den ersten Vorsprüngen 8 handelt es sich um eine geschlossene Kontur, die den Kopf, Rumpf und Arme des Schneemanns bildet, zwei kreisringförmige Konturen, die Knopfe auf dem Rumpf symbolisieren, sowie weitere linienförmige und punktförmige Vorsprunge, die das Gesicht und die Haare des Schneemanns bilden. Die ersten Vorsprunge 8 erheben sich hier 1,8 mm von der Grundflache 2.2 der Platte 2. Auf diese Weise ist eine eindeutige und klare Prägung des Teigs bei geringer Höhe der Vorsprunge 8 ermöglicht.

Darüber hinaus weist die Platte 2 einen kreisringförmig ausgebildeten zweiten Vorsprung 10 auf. Der zweite Vorsprung 10 ist am Rand der Platte 2 angeordnet und erhebt sich hier 2 mm von der Grundflache 2.2. Somit umschließt der zweite Vorsprung 10 das aus den ersten Vorsprüngen 8 gebildete Schneemannmotiv. Wird der erfindungsgemäße Stempel mit der Grundflache 2.2 voran beispielsweise in einen auf einem Tisch oder dergleichen ausgerollten Teig gedruckt, ist es auf diese Weise in einem einzigen Arbeitsschritt möglich, das Schneemannmotiv in den Teig einzuprägen und das geprägte Teigstuck mittels des zweiten Vorsprungs 10 aus dem Rest des Teigs auszustechen.

Der Bügelgriff 4 ist derart ausgebildet und an der Platte 2 angeordnet, dass der Bügelgriff 4 in dessen Ruhelage die Höhe der Platte 2 nicht übersteigt. Somit entspricht die Gesamthöhe des Stempels in der Ruhelage des Bügelgriffes 4 der aufaddierten Höhe von Platte 2 und des zweiten Vorsprungs 10.

In dem vorliegenden Ausführungsbeispiel betragt die Gesamthöhe des Stempels in der Ruhelage des Bügelgriffes 4 3,3 mm. Da die ersten Vorsprunge 8 im Vergleich zu dem zweiten Vorsprung 10 hier eine geringere Höhe aufweisen, vergrößern diese die Gesamthöhe des Stempels nicht.

Die Fig. 1b und 1c zeigen voneinander verschiedene Seitenansichten des ersten Ausführungsbeispiels, wobei Fig. 1b die Seitenansicht mit Blickrichtung von links nach rechts auf Fig. 1a und Fig. 1c die Seitenansicht mit Blickrichtung von oben nach unten auf Fig. 1a wiedergibt; jeweils bezogen auf die Blattebene.

Fig. 1d zeigt das erste Ausführungsbeispiel in einer Draufsicht. Aus Fig. 1d ist deutlich zu erkennen, dass der Griff 4 lediglich über die beiden Filmscharniere 6 mit der Platte 2 verbunden ist. Die Deckflache 2.3 der Platte 2 ist hier glatt, also ohne Oberflächenstruktur oder dergleichen, ausgeführt.

Fig. 1e zeigt das erste Ausführungsbeispiel, bezogen auf die Blattebene, in einer zur Fig. 1 um 90° im Gegenuhrzeigersinn gedrehten Ansicht. In Fig. 1e ist der Bügelgriff 4 sowohl in dessen Ruhelage wie auch in dessen Verwendungslage dargestellt.

Deutlich erkennbar ist, dass der Bügelgriff 4 in dessen Ruhelage -in Fig. 1e in der Blattebene waagrecht verlaufend- die Höhe der Platte 2 und damit die Gesamthöhe des Stempels, im Vergleich zu der aufaddierten Höhe von Platte 2 und zweiten Vorsprung 10, nicht vergrößert.

In der ebenfalls dargestellten Verwendungslage -in Fig. 1e in der Blattebene senkrecht verlaufend- ermöglicht der Bügelgriff 4 eine komfortable Bedienung des Stempels. Der Bügelgriff 4 ist hierzu, ausgehend von dessen Ruhelage, mittels der Filmscharniere 6 in der Blattebene um 90° nach links verschwenkt, was durch den Doppelpfeil 12 symbolisiert ist.

Der Bügelgriff 4 kann, je nach Bedarf, von dessen Ruhelage in dessen Verwendungslage oder umgekehrt, also von dessen Verwendungslage in die Ruhelage überführt werden.

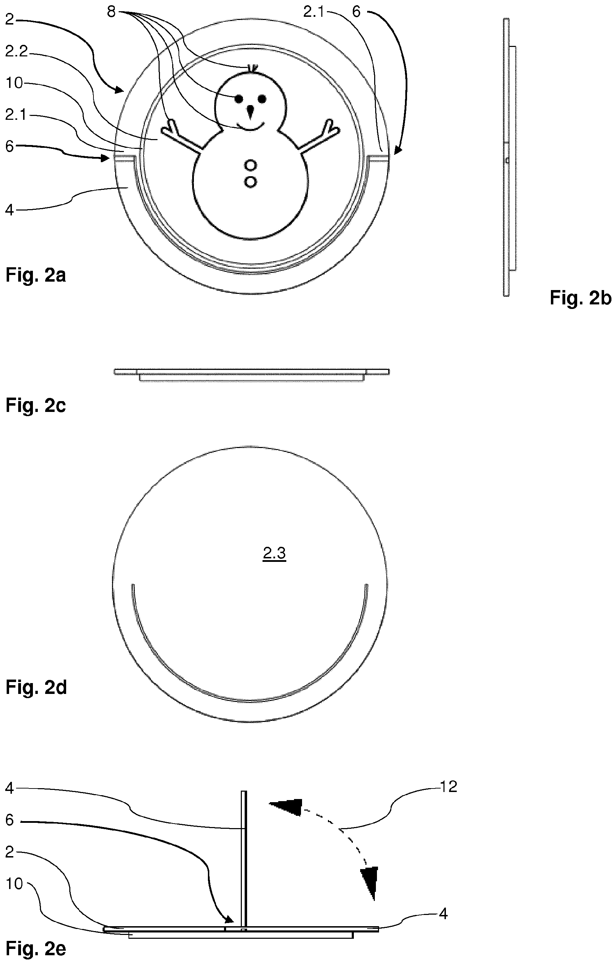

In der Fig. 2a bis 2e ist ein zweites Ausführungsbeispiel gezeigt.

Im Unterschied zu dem ersten Ausführungsbeispiel ist die Platte 2 randseitig derart gestaltet, dass diese mit dem in der Ruhelage befindlichen Bügelgriff 4 eine im Wesentlichen geschlossene Randkontur bildet; siehe insb. Fig. 2a und 2d. Die Arme 2.1 gehen hier nahtlos in die restliche Randkontur der Platte 2 über.

Der Bügelgriff 4 fügt sich somit in dessen Ruhelage derart in die Randkontur der Platte 2 ein, dass die randseitige Kontur der Platte 2 mit dem Bügelgriff 4 im Wesentlichen stetig -also ohne sprunghafte Änderungen der Kontur- verlauft.

Ansonsten ist die Ausführungsform gemäß, dem zweiten Ausführungsbeispiel vergleichbar mit dem ersten Ausführungsbeispiel.

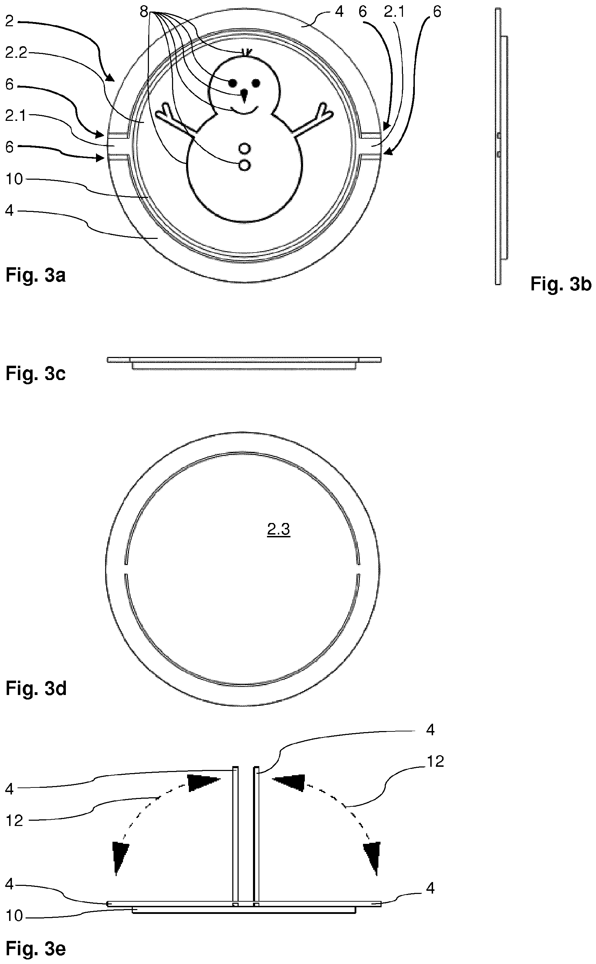

Fig. 3a bis 3e zeigen ein drittes Ausführungsbeispiel des erfindungsgemäßen Stempels.

Im Unterschied zu den ersten beiden Ausführungsbeispielen weist der Stempel hier zwei sich diametral gegenüberliegende Bügelgriffe 4 auf; siehe insbesondere die Fig. 3a und 3d. Die kreisförmige Randkontur ist von den beiden Bügelgriffen 4 in deren Ruhelagen im Wesentlichen umschlossen.

Fig. 3e zeigt, analog zu den vorgenannten Ausführungsbeispielen, die beiden Bügelgriffe 4 sowohl in deren Ruhelage wie auch in deren Verwendungslage.

Zum Gebrauch des Stempels wird hier der in der Blattebene von Fig. 3e links angeordnete Bügelgriff 4 im Uhrzeigersinn und der in der Blattebene rechts angeordnete Bügelgriff 4 im Gegenuhrzeigersinn von der jeweiligen Ruhelage in die Verwendungslage überführt. Durch die Verwendung von zwei Bügelgriffen 4 ist die Stabilität des Stempels bei dessen Gebrauch weiter erhöht.

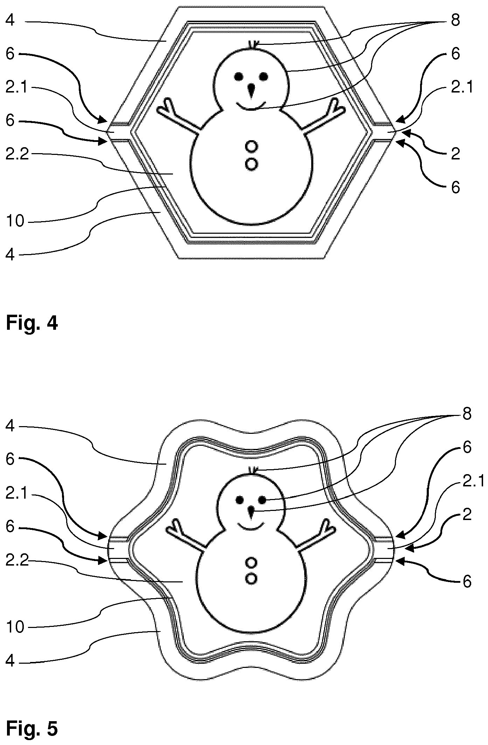

In Fig. 4 ist ein viertes Ausführungsbeispiel gezeigt, das vergleichbar dem dritten Ausführungsbeispiel ist. Im Unterschied zu dem dritten Ausführungsbeispiel weist die Platte 2 bei dem vierten Ausführungsbeispiel eine sechseckige Randkontur auf, die von zwei Bügelgriffen 4 in deren Ruhelage im Wesentlichen umschlossen wird. Dabei folgen die zwei Bügelgriffe 4 der sechseckigen Randkontur der Platte 2.

Gleiches gilt für das in Fig. 5 dargestellte fünfte Ausführungsbeispiel, bei dem die Platte 2 im Unterschied zu dem dritten und vierten Ausführungsbeispiel eine sechseckige Randkontur mit abgerundeten Ecken und kreisbogenförmigen Einbuchtungen, ähnlich einer Blumenblute, aufweist.

In Analogie dazu lassen sich auch weitere Ausführungsbeispiele angeben, bei denen die Platte 2 eine sechseckige Randkontur mit oder ohne abgerundeten Ecken und kreisbogenförmigen Einbuchtungen aufweist, die jedoch im Weiteren entweder gemäß dem ersten oder dem zweiten Ausführungsbeispiel ausgebildet sind.

Die Erfindung ist nicht auf die vorliegenden Ausführungsbeispiele begrenzt.

So sind auch andere Randkonturen als die in den Ausführungsbeispielen genannten Randkonturen möglich.

Darüber hinaus ist es denkbar, dass auf der Deckflache der Platte, die einem Benutzer während der Verwendung des Stempels zugewandt ist, das Motiv ebenfalls dargestellt ist. Das Motiv oder andere für den Benutzer nützliche Informationen konnten beispielsweise aufgedruckt oder eingeprägt sein.

Ferner ist es möglich, dass für die Bildung des Motives auf der Grundflache der Platte anstelle von Vorsprüngen mindestens eine Vertiefung in der Grundflache oder auch eine Kombination aus mindestens einem Vorsprung und mindestens einer Vertiefung verwendet wird. Auch ist es nicht zwingend erforderlich, den Stempel sowohl zum Prägen wie auch zum Ausstechen geeignet auszubilden. Grundsätzlich ist es auch möglich, den Stempel lediglich zum Prägen oder zum Ausstechen auszubilden.

Das Motiv selbst ist je nach Anwendungsfall und Kundenwünschen in weiten Grenzen frei wählbar. Grundsätzlich sind alle Motive denkbar, die sich durch die bei der jeweiligen Stempelgröße möglichen Dimensionen von Vorsprüngen und/oder Vertiefungen darstellen lassen.

Auch wäre es denkbar, dass der mindestens eine erste Vorsprung und/oder die mindestens eine Vertiefung zum Prägen außerhalb eines als geschlossene Kontur ausgebildeten zweiten Vorsprungs zum Ausstechen auf der Grundflache angeordnet ist. Auf diese Weise wäre es möglich, mit einem Arbeitsschritt zum einen ein Teigstuck oder dergleichen auszustechen und ein anderes Teigstuck oder dergleichen zu Prägen.

Die Verwendung eines erfindungsgemäßen Stempels ist nicht auf Teigwaren beschränkt. Vielmehr lasst sich der Stempel auch für das Prägen und/oder Ausstechen bei anderen hierfür geeigneten Materialien gebrauchen. Auch ist der erfindungsgemäße Stempel für andere Tätigkeiten, wie beispielsweise das Aufdrucken, verwendbar.

In Ergänzung zu den obigen Ausführungen wäre es ferner möglich, dass der Griff, mittels zueinander korrespondierender Rastmittel des Griffes und der Platte, in dessen Ruhelage und/oder in dessen Verwendungslage lösbar fixiert ist.

Die Platte muss nicht eben ausgeführt sein, sondern kann auch gekrümmt verlaufen. Deckflache und Grundflache sind dabei gekrümmt und verlaufen zueinander parallel. Beispielsweise wäre dies sinnvoll bei einem erfindungsgemäßen Stempel, der als Beilage für eine gekrümmte Verpackung, ein Glas oder dergleichen, vorgesehen ist. Auf diese Weise konnte der Stempel eng anliegend an der Verpackung angebracht werden.

Auch müssen Deckflache und Grundflache nicht parallel zueinander ausgebildet sein. Beispielsweise wäre es denkbar, dass die Platte eine ebene Deckflache und eine gekrümmte Grundflache aufweist, insbesondere einer plankonvexen Anordnung ahnend. Darüber hinaus konnten Deckflache und Grundflache gekrümmt ausgebildet sein, insbesondere einer bikonvexen Anordnung ähnelnd.

Bei den vorgenannten Alternativen ergibt es sich, dass die Höhe der Platte, also der Abstand zwischen Deckflache und Grundflache, nicht konstant ist. Entsprechend ist der Griff eines erfindungsgemäßen Stempels gemäß Anspruch 2 derart ausgebildet und an der Platte angeordnet, dass der Griff in dessen Ruhelage die Höhe der Platte an keiner Stelle des Stempels nicht wesentlich überragt.

Der Fachmann wird, je nach Anwendungsfall, die geeigneten Materialien für die Platte und den mindestens einen Griff auswählen. Dabei müssen die beiden Materialien nicht zwingend übereinstimmen.

Beispielsweise können neben dem ersten Vorsprüngen 8 und den zweiten Vorsprüngen 10 weitere Vorsprunge und/oder Vertiefungen vorgesehen werden, welche weitere Ebenen beim Prägen und/oder Ausstechen bilden und so ein besonders ansprechendes Aussehen für das geprägte und/oder ausgestochene Produkt zur Verfügung stellen.

Beispielsweise kann die Höhe der Vorsprünge 8, 10 und etwaige weiterer Vorsprünge bei einer alternativen Ausführungsform des erfindungsgemäßen Stempels gleich gewählt sein.

### Bezugszeichenliste:

- 2: Platte
- 2.1: Arm
- 2.2: Grundfläche
- 2.3: Deckfläche
- 2.4: Randfläche
- 4: Griff
- 6: Gelenk
- 8: Vorsprung, als erster Vorsprung ausgebildet
- 10: Vorsprung, als zweiter Vorsprung ausgebildet
- 12: Doppelpfeil, symbolisiert das Verschwenken des Griffes 4

## Patentansprüche

1. Stempel zum Prägen oder Ausstechen, mit einer Platte an der mindestens ein Griff angeordnet ist, wobei die Platte eine Deckfläche und eine der Deckfläche gegenüberliegende Grundfläche sowie eine die Deckfläche und die Grundfläche verbindende Randfläche aufweist und an der mindestens ein Vorsprung aus der Grundfläche heraus- und/oder mindestens eine Vertiefung in diese hineinragt, wobei der Griff (4) gelenkig an der Platte (2) befestigt ist und von einer Ruhelage in eine Verwendungslage und umgekehrt überführbar ist, wobei der Griff (4) und die Platte (2) einstückig aus einem Kunststoff ausgebildet sind, wobei der Griff (4) als ein Bügelgriff (4) ausgebildet ist, der über zwei voneinander beabstandete und als Filmscharniere ausgebildete Gelenke (6) an der Platte (2) befestigt ist, und wobei die Filmscharniere (6) durch eine Materialschwächung zwischen Platte (2) und Griff (4) ausgebildet sind, und wobei der Griff (4) in dessen Ruhelage die Platte (2) zumindest teilweise randseitig umschließt.

2. Stempel nach Anspruch 1, **dadurch gekennzeichnet, dass** der Griff (4) derart ausgebildet und an der Platte (2) angeordnet ist, dass der Griff (4) in dessen Ruhelage die Höhe der Platte (4) im Wesentlichen nicht überragt.

3. Stempel nach Anspruch 1 oder 2, **dadurch gekennzeichnet, dass** der Griff (4) die Platte (2) derart umschließt, dass die randseitige Kontur der Platte (2) mit dem Griff (4) im Wesentlichen stetig verläuft.

4. Stempel nach einem der Ansprüche 1 bis 3, **dadurch gekennzeichnet, dass** der Stempel in der Ruhelage des Griffes (4) eine Gesamthöhe von kleiner oder gleich 3,3 mm aufweist.

5. Stempel nach einem der Ansprüche 1 bis 4, **dadurch gekennzeichnet, dass** der Vorsprung (8) eine Höhe und/oder die Vertiefung eine Tiefe von kleiner oder gleich 1,8 mm aufweist/aufweisen.

6. Stempel nach einem der Ansprüche 1 bis 5, **dadurch gekennzeichnet, dass** der Stempel mindestens einen ersten Vorsprung (8) und einen zweiten Vorsprung (10) aufweist, wobei der zweite Vorsprung (10) als eine geschlossene Kontur ausgebildet ist, peripher zu dem ersten Vorsprung (8) und/oder der Vertiefung angeordnet ist und, bezogen auf die Grundfläche (2.2), eine Höhe aufweist, die größer als die des ersten Vorsprungs (8) ist.

7. Stempel nach einem der Ansprüche 1 bis 6, **dadurch gekennzeichnet, dass** die Grundfläche (2.2) und die Deckfläche (2.3) zueinander parallel verlaufen derart, dass die Höhe der Platte (2) konstant gleich ist.

8. Stempel nach einem der Ansprüche 1 bis 7, **dadurch gekennzeichnet, dass** die Platte (2) zur Ausbildung der Filmscharniere (6) im Verbindungsbereich mit dem Griff (4) zwei sich diametral gegenüberliegende, randseitige Arme (2.1) aufweist.

9. Stempel nach einem der Ansprüche 1 bis 8, **dadurch gekennzeichnet, dass** die Platte (2) kreisscheibenförmig ausgebildet ist, wobei der Bügelgriff (4) die Platte (2) im Wesentlichen halbkreisringförmig umschließt.

## Claims

1. Stamp for embossing or cutting out, comprising a plate on which at least one handle is arranged, wherein the plate has a top surface and a base surface opposite the top surface and an edge surface connecting the top surface and the base surface and on which at least one projection protrudes out of the base surface and/or at least one indentation protrudes into the latter, wherein the handle (4) is connected to the plate (2) in an articulated manner and can be transferred from a rest position into a usage position and vice versa, wherein the handle (4) and the plate (2) are formed in one piece from a plastic, wherein the handle (4) is formed as a bow handle (4), which is secured to the plate (2) via two joints (6) spaced apart from each other and formed as film hinges, and wherein the film hinges (6) are formed by a material weakening between plate (2) and handle (4), and wherein the handle (4), in its rest position, encloses the plate (2) at least partly at the edge.

2. Stamp according to Claim 1, **characterized in that** the handle (4) is formed in such a way and is arranged on the plate (2) in such a way that in its rest position the handle (4) does not project substantially beyond the height of the plate (4).

3. Stamp according to Claim 1 or 2, **characterized in that** the handle (4) encloses the plate (2) in such a way that the contour of the plate (2) at the edge extends substantially continuously with the handle (4).

4. Stamp according to one of Claims 1 to 3, **characterized in that**, in the rest position of the handle (4), the stamp has a total height of less than or equal to 3.3 mm.

5. Stamp according to one of Claims 1 to 4, **characterized in that** the projection (8) has a height and/or the indentation has a depth of less than or equal to 1.8 mm.

6. Stamp according to one of Claims 1 to 5, **characterized in that** the stamp has at least one first projection (8) and a second projection (10), wherein the second projection (10) is formed as a closed contour, is arranged peripherally relative to the first projection (8) and/or the indentation and, in relation to the base surface (2.2), has a height which is greater than that of the first projection (8).

7. Stamp according to one of Claims 1 to 6, **characterized in that** the base surface (2.2) and the top surface (2.3) extend parallel to each other in such a way that the height of the plate (2) is constantly the same.

8. Stamp according to one of Claims 1 to 7, **characterized in that**, to form the film hinges (6), the plate (2) has two diametrically opposite arms (2.1) at the edge in the connecting region with the handle (4).

9. Stamp according to one of Claims 1 to 8, **characterized in that** the plate (2) is formed like a circular disc, wherein the bow handle (4) encloses the plate (2) substantially in the form of a semi-circular ring.

## Revendications

1. Tampon de gaufrage ou de découpage, comprenant une plaque sur laquelle est disposée au moins une poignée, la plaque comportant une surface supérieure et une surface de base opposée à la surface supérieure ainsi qu'une surface de bord reliant la surface supérieure et la surface de base, au moins une saillie s'étendant depuis la surface de base de ladite plaque et/ou au moins un évidement d'étendant dans ladite plaque, la poignée (4) étant fixée de manière articulée à la plaque (2) et pouvant être transférée d'une position de repos dans une position d'utilisation et inversement, la poignée (4) et la plaque (2) étant formées d'une seule pièce à partir d'une matière synthétique, la poignée (4) étant conçue comme une poignée en forme d'étrier (4) qui est fixée à la plaque (2) par deux articulations (6) espacées l'une de l'autre et conçues comme des charnières à film, et les charnières à film (6) étant formées par un affaiblissement de matière entre la plaque (2) et la poignée (4), et la poignée (4) enserrant dans sa position de repos au moins partiellement la plaque (2) au niveau du bord.

2. Tampon selon la revendication 1, **caractérisé en ce que** la poignée (4) est conçue et disposée sur la plaque (2) de telle sorte que, dans sa position de repos, la poignée (4) ne va sensiblement pas au-delà de la hauteur de la plaque (4).

3. Tampon selon la revendication 1 ou 2, **caractérisé en ce que** la poignée (4) enserre la plaque (2) de telle sorte que le contour côté bord de la plaque (2) s'étend de manière sensiblement continue avec la poignée (4).

4. Tampon selon l'une des revendications 1 à 3, **caractérisé en ce que**, lorsque la poignée (4) est dans la position de repos, le tampon a une hauteur totale inférieure ou égale à 3,3 mm.

5. Tampon selon l'une des revendications 1 à 4, **caractérisé en ce que** la saillie (8) a une hauteur et/ou l'évidement a une profondeur inférieure ou égale à 1,8 mm.

6. Tampon selon l'une des revendications 1 à 5, **caractérisé en ce que** le tampon comporte au moins une première saillie (8) et une deuxième saillie (10), la deuxième saillie (10) étant conçue comme un contour fermé, est disposée à la périphérie de la première saillie (8) et/ou de l'évidement et a une hauteur, rapportée à la surface de base (2.2), qui est supérieure à celle de la première saillie (8).

7. Tampon selon l'une des revendications 1 à 6, **caractérisé en ce que** la surface de base (2.2) et la surface supérieure (2.3) s'étendent parallèlement l'une à l'autre de telle sorte que la hauteur de la plaque (2) soit constamment la même.

8. Tampon selon l'une des revendications 1 à 7, **caractérisé en ce que**, pour former les charnières à film (6) dans la zone de liaison avec la poignée (4), la plaque (2) comporte deux bras côté bord (2.1) diamétralement opposés.

9. Tampon selon l'une des revendications 1 à 8, **caractérisé en ce que** la plaque (2) est conçue en forme de disque circulaire, la poignée en forme d'étrier (4) enserrant la plaque (2) essentiellement sous la forme d'un anneau semi-circulaire.
